Europäisches Patentamt

European Patent Office

Office européen des brevets

(11) Publication number : **0 608 640 A1**

(19)

# EUROPEAN PATENT APPLICATION

(12)

(21) Application number : 93310607.2

(22) Date of filing : 29.12.93

(51) Int. Cl.$^5$ : **C08F 2/00**, C08F 14/06, F28F 19/00

(30) Priority : **30.12.92 JP 361216/92**

(43) Date of publication of application :
**03.08.94 Bulletin 94/31**

(84) Designated Contracting States :
**DE FR GB NL PT**

(71) Applicant : **SHIN-ETSU CHEMICAL CO., LTD.**
**6-1, Ohtemachi 2-chome**
**Chiyoda-ku Tokyo (JP)**

(72) Inventor : **Ohnishi, Shuji**
**510 That Way, No.812**
**Lake Jackson, TX 77566 (US)**
Inventor : **Tanifuji, Yoichi**
**2-14-1-617, Hachigasaki**
**Matsudo-shi, Chiba-ken (JP)**
Inventor : **Amano, Tadashi**
**5-3-22, Shittechuo,**
**Kamisu-machi**
**Kashima-gun, Ibaraki-ken (JP)**

(74) Representative : **Votier, Sidney David**
**CARPMAELS & RANSFORD**
**43, Bloomsbury Square**
**London WC1A 2RA (GB)**

(54) **Polymerization apparatus.**

(57)   A polymerization apparatus which comprises a polymerization vessel and a circulating passage for circulation of a reaction mixture comprising a heat exchanger installed outside the polymerization vessel and a circulating pipe extending from the polymerization vessel and returning to the polymerization vessel through the heat exchanger, wherein at least a part of the inner surfaces of the circulating passage with which the reaction mixture comes into contact is covered with a film of gold or a gold-based alloy. Polymer scale is prevented from being deposited in the circulating passage. When the polymer obtained is formed into a product such as a sheet, a very small amount of fish eyes are poduced. Therefore, polymers of high quality can be produced efficiently at a high productivity.

FIG. I

EP 0 608 640 A1

## BACKGROUND OF THE INVENTION

### 1. Field of the Invention

The present invention relates to a polymerization apparatus for polymerizing a monomer having an ethylenic double bond wherein polymerization is carried out while a reaction mixture is circulated through a heat exchanger installed separately from the polymerization vessel.

### 2. Description of the Prior Art

Heretofore, the polymerization of a monomer having an ethylenic double bond has been carried out in such a manner that a polymerization medium such as water, a monomer having an ethylenic double bond, a polymerization initiator, a dispersant, and, optionally, other various additives are charged into a polymerization vessel equipped with a jacket and a reflux condenser, and subsequently the inside of the polymerization vessel is heated to start the reaction. During the polymerization reaction the heat of polymerization is removed by circulating cooling water through the jacket and the reflux condenser to maintain the reaction system at a prescribed temperature.

In recent years, in order to improve the productivity, the following measures have been taken: (1) the polymerization vessel is made large in size and (2) the polymerization time per batch is shortened. However, since the enlargement of the polymerization vessel has resulted in a decrease in the ratio of the heat transfer area to the volume of a reaction mixture, the above prior method of removing heat has become incapable of removing the heat of polymerization. In addition, if the polymerization time per batch is shortened, the capacity for removing the heat becomes even less because the generation of heat due to the polymerization reaction per unit time increases.

Some methods for overcoming the above disadvantages have been proposed, of which methods wherein a reaction mixture is circulated through a heat exchanger installed outside a polymerization vessel (see Japanese Pre-examination Patent Publication (KOKAI) Nos. 54-24991 (1979), 56-47410 (1981) and 58-32606 (1983), and Japanese Patent Publication (KOKOKU) No. 64-11642 (1989)) can be as effective. These methods are quite effective in that the ratio of the heat transfer area to the unit volume of the reaction mixture can be increased.

However, according to these methods, there is a problem in that the polymer scale which is deposited, grows and is peeled off in a circulating passage comprising the heat exchanger and a circulating pipe connecting the heat exchanger to the polymerization vessel, may clog tubes in the heat exchanger. Further, when the polymer obtained is formed into a product such as a sheet, fish eyes increase.

## SUMMARY OF THE INVENTION

Accordingly, an object of the present invention is to provide a polymerization apparatus for polymerizing a monomer having an ethylenic double bond which comprises a polymerization vessel and a circulating passage comprising a heat exchanger installed outside said polymerization vessel and a circulating pipe extending from said polymerization vessel and returning to said polymerization vessel through said heat exchanger, in which polymer scale is prevented from being deposited in the circulating passage and by which a polymer can be obtained which can be formed into a product such as a sheet with a very small number of fish eyes.

The present inventors have studied intensively and have solved the above object.

The present invention provides a polymerization apparatus which comprises a polymerization vessel and a circulating passage for circulation of a reaction mixture comprising a heat exchanger installed outside said polymerization vessel and a circulating pipe extending from said polymerization vessel and returning to said polymerization vessel through said heat exchanger, wherein at least a part of the inner surfaces of the circulating passage with which the reaction mixture comes into contact is coated with a film of gold or a gold-based alloy.

Using the polymerization apparatus of the present invention, it is possible to prevent polymer scale from being deposited in the circulating passage. Accordingly, it is possible to reduce fish eyes when the resulting polymer is formed into a product such as a sheet, and to produce the polymer efficiently at a high productivity. Particularly, the present polymerization apparatus is effective when conducting polymerization in a large-sized polymerization vessel.

## BRIEF DESCRIPTION OF THE DRAWINGS

Fig. 1 is a view schematically illustrating the whole of the present polymerization apparatus.

Fig. 2 is an enlarged view of a part connecting a slurry recovery pipe to a circulating pipe.

Fig. 3 is an enlarged view of a part connecting a drain pipe to a circulating pipe.

Fig. 4 is a longitudinal sectional view showing an example of an in-line type strainer.

Fig. 5 is a longitudinal sectional view showing another example of an in-line type strainer.

Fig. 6 is a longitudinal sectional view showing a further example of an in-line type strainer.

Fig. 7 is a longitudinal sectional view showing an example of a basket type strainer.

Fig. 8 is an enlarged view of an inlet part of a heat exchanger.

Fig. 9 is an enlarged view of an outlet part of a heat exchanger.

Fig. 10 is an enlarged view of a part where a circulating pipe returns to and is connected to a polymerization vessel.

Fig. 11 is a front view of a filter which is installed inside a strainer used in the example.

## DETAILED DESCRIPTION OF PREFERRED EMBODIMENTS

According to the studies of the present inventors, polymer scale deposition in the circulating passage has proved to be liable to occur, for example, particularly in the following cases:

(1) When the reaction mixture flowing in the circulating passage transfers from a pipe of a large diameter to a pipe of a smaller diameter, polymer scale deposition is liable to occur at the inlet part of the smaller diameter pipe.

This is presumably caused by the fact that, due to a very rapid change in the linear transfer velocity of the reaction mixture, monomer droplets present in said reaction mixture or polymer particles contained in some cases are broken and pulverized into very fine particles, which may be deposited at the inlet part of the smaller diameter pipe.

As examples in which the reaction mixture transfers from a pipe of a large diameter to one of a smaller diameter, the following cases are included: the case in which said reaction mixture flows out of the circulating pipe into a strainer installed within the circulating passage, and the case in which said reaction mixture flows into heat exchange tubes in the heat exchanger installed in the circulation passage. In both cases, polymer scale is liable to be deposited at the inlet part of the strainer and the inlet part of the heat exchange tubes.

Therefore, it is preferred to form a gold film or gold-based alloy film on inner surfaces of these parts.

(2) When the reaction mixture flowing in the circulating passage flows out of heat exchange tubes in the heat exchanger and when said reaction mixture flows into the polymerization vessel out of the circulating pipe where the circulating passage returns to and is connected to the polymerization vessel, polymer scale is liable to be deposited in the vicinities of the outlet of the heat exchange tubes and of the return inlet (nozzle) of the circulating pipe to the polymerization vessel.

Therefore, it is preferred to form a gold-based alloy film on surfaces of these parts, too.

(3) Further, it has been confirmed that polymer scale deposition is liable to occur at stagnant positions in the flow of the reaction mixture in the circulating passage. It is presumed that polymer scale is liable to be deposited because of a long time contact of the reaction mixture with inner surfaces at the stagnant positions in the flow of said reaction mixture.

As a countermeasure to this, by forming a gold film or gold-based alloy film at the stagnant positions of said reaction mixture, polymer scale can be prevented from being deposited.

Examples of the positions where the reaction mixture is stagnant in the circulating passage, include recessed parts of side walls in the circulating passage. Typical examples of the recessed parts of side walls include branch pipes branching off from the circulating passage, such as for example a slurry recovery pipe, a drain pipe, a bypass pipe and the like. Thus, since valves for these branch pipes are closed during the circulation of the reaction mixture, stagnation of said reaction mixture is liable to occur in the pipes between the valves and the circulating pipe (so-called dead spaces).

According to the present invention, it is possible to prevent polymer scale from being deposited by coating positions where polymer scale is liable to be deposited with gold or a gold-based alloy. Namely, it is preferred to form the gold or gold-based alloy film at least on one of the inlet part of the strainer, the inlet part of heat exchange tubes in the heat exchanger, the outlet part of heat exchange tubes in said heat exchanger, the return inlet part to the polymerization vessel from the circulating pipe, and positions where the the reaction mixture is stagnant. More preferably, the gold or gold-based alloy film is formed on all those parts where polymer scale deposition is particularly liable to occur. Moreover, in order most effectively to prevent polymer scale from being deposited, it is also preferred to form the gold or gold-based alloy film on inner surfaces of the parts with which the reaction mixture comes into contact, specifically such as inner surfaces of pipes, the heat exchanger, the circulating pump, valves and other pieces of equipment.

As the film, preferred is a gold-based alloy film because of further improved scale prevention is obtained. The gold-based alloy herein means an alloy containing 50% by weight or more includes, for example, an Au-Co alloy, an Au-Ni alloy, an Au-Co-Ni alloy and the like in which 50% by weight or more of gold is contained. The content of gold contained in these alloys preferably ranges from 70 % by weight or more, more preferably 90 to 99.5 % by weight.

The thickness of the gold or gold-based alloy film is preferably 0.01 to 3 $\mu$m, more preferably 1 to 3 $\mu$m.

Methods of forming the gold or gold-based alloy film include, for example, general methods such as electroplating, electrodeless plating, hot dipping, vacuum evaporation, diffusion coating and metallikon.

Further, in order to improve adhesion of the gold or alloy film, it is preferred to conduct a pretreatment suitable to the technology applied onto the part where said alloy film is formed, for example a pretreatment such as washing with water, an ultrasonic treatment, a polishing treatment, a surface treatment with an alkaline substance, e.g. sodium hydroxide, to the surface for alloy plating.

Furthermore, if there are parts on the inner surfaces of the circulating passage with which a reaction mixture comes into contact but nevertheless on which a gold or gold-based alloy film is not formed, it is preferred that the parts are polished. The polishing method is not particularly limited and includes, for example, buffing, immersion electrolytic polishing, electrolytic composite polishing and the like.

As for the roughness of the polished surfaces, the maximum height (R max) is preferred to be not more than 1 $\mu$m, and more preferably not more than 0.7 $\mu$m. Most preferably, the maximum height (R max) is not more than 1 $\mu$m and the center-line mean roughness (Ra) is not more than 0.2 $\mu$m. The maximum height (R max) and the center-line mean roughness (Ra) are defined in JIS B 0601.

The present invention will now be specifically described below, based on the drawings illustrating the present polymerization apparatus.

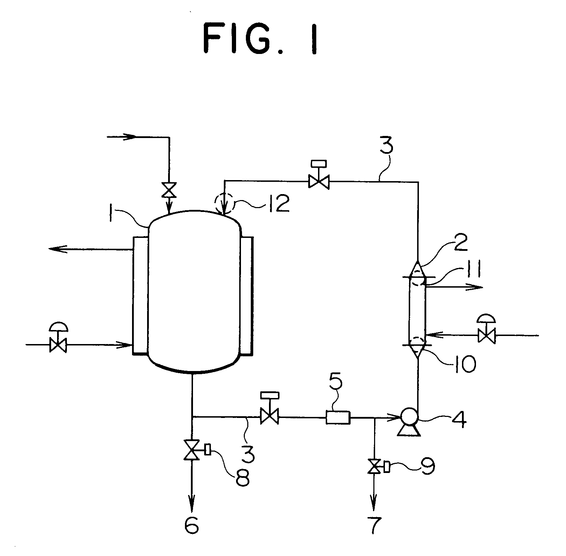

Fig. 1 shows schematically an example of the polymerization apparatus of the present invention as a whole. The present polymerization apparatus is equipped with a polymerization vessel 1, a heat exchanger 2 for heating or cooling a reaction mixture, and a circulating pipe 3 extending from the bottom of the polymerization vessel 1 and returning to the polymerization vessel 1 through the heat exchanger 2. The present polymerization apparatus is also equipped with a circulating pump 4 within the circulating pipe 3. Furthermore, a strainer 5 is provided within the circulating pipe 3 between the polymerization vessel 1 and the heat exchanger 2.

In the present polymerization apparatus, an aqueous reaction mixture charged into the polymerization vessel 1, containing a monomer, an aqueous medium, a dispersant, and an oil-soluble polymerization initiator, is taken off from the bottom of the polymerization vessel 1 by the circulating pump 4 and passed to the heat exchanger 2 through the circulating pipe 3. After cooling or heating, the reaction mixture is returned to a gas phase part or a liquid phase part of the polymerization vessel 1 through the circulating pipe 3 again. Further, both polymer scale peeled off during circulation of the reaction mixture and polymer in the form of blocks are trapped by the strainer 5.

In the present polymerization apparatus, it is preferred to form a gold-based alloy film on surfaces of the inlet part of the strainer 5 and the inlet part 10 of heat exchange tubes in the heat exchanger 2. In addition, it is also preferred to form a gold-based alloy film on inner surfaces of the outlet part 11 of the heat exchange tubes in the heat exchanger 2 and the return inlet part 12 of the circulating pipe 3 to the polymerization vessel 1.

Further, the present polymerization apparatus is equipped with a slurry recovery pipe 6 and a drain pipe 7.

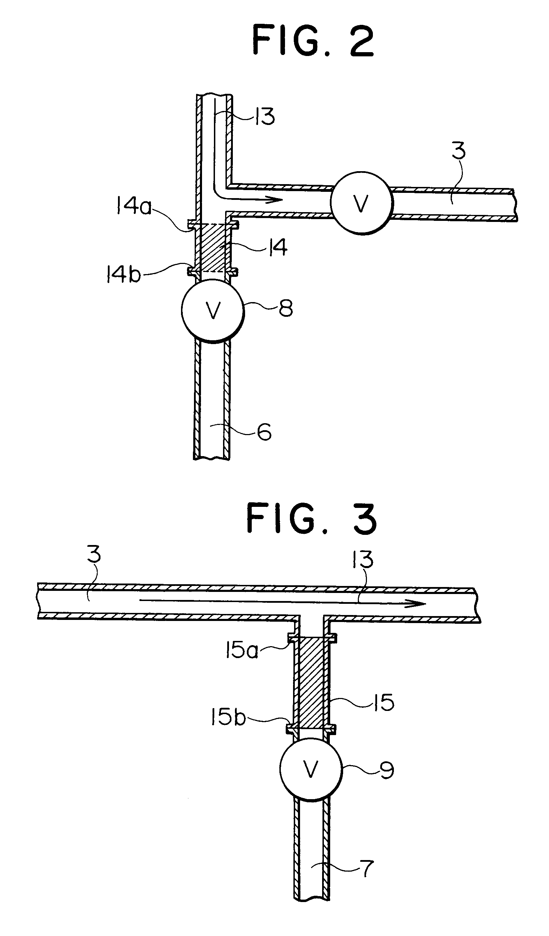

Fig. 2 is an enlarged view of a part connecting the slurry recovery pipe 6 to the circulating pipe 3, shown in Fig 1. While the reaction mixture is circulating in the circulating passage (in the direction of arrowhead 13 in Fig. 2), a valve 8 in the slurry recovery pipe is closed, and therefore said reaction mixture is liable to stagnate at a dead space between a diverging point of the circulating pipe 3 and the valve 8, and polymer scale is liable to be deposited there. However, since the gold or gold-based alloy film is formed in the dead space, it is possible to prevent polymer scale from being deposited. In the embodiment of Fig. 2, the dead space part of the pipe 6 is easily removable by flanges 14a and 14b and comprises a pipe member 14 of which the inner surface is covered with the gold or gold-based alloy film.

Fig. 3 is an enlarged view of a part connecting the drain pipe 7 to the circulating pipe 3. While the reaction mixture is circulating in the circulating passage (in the direction of arrowhead 13 in Fig. 3), a valve 9 in the drain pipe is closed, and therefore said reaction mixture is liable to stagnate at a dead space between the circulating pipe 3 and the valve 9 and polymer scale is liable to be deposited there. However, since the gold or gold-based alloy film is formed on the inner surface of the dead space, it is possible to prevent polymer scale

4

from being deposited. In the embodiment of Fig. 3, the dead space part of the pipe 7 is easily removable by flanges 15a and 15b and comprises a pipe member 15 of which the inner surface is covered with the gold or gold-based alloy film.

As the polymerization vessel 1 in the present polymerization apparatus, a polymerization vessel of the conventionally known type can be used which is equipped with an agitator, a reflux condenser, a baffle, a jacket, etc. The agitator is of a stirring blade type such as a paddle type, a Pfaudler type, a Brumagin type, a propeller type, or a turbine type, and, if necessary, is used in combination with a baffle such as a flat plate, a cylinder, or a hair pin coil.

As the heat exchanger 2, a known heat exchanger such as a multi-pipe type, a coil type, a spiral type, or a trombone cooler can be used, and as the heating/cooling medium therefor, for example, steam, cooling water, brine, etc., can be used. The circulating pipe 3 itself may be a double pipe, so that the efficiency of the removal of heat may be increased by passing cooling water or brine through the outer space thereof.

The polymerization vessel 1, the heat exchanger 2, the circulating pipe 3, the circulating pump 4, the strainer 5 and other parts including valves which will be in contact with the reaction mixture are preferably made of a stainless steel, for example the stainless steel of the "18-8" austenite type, the "13" chromium ferrite type, the martensite type, the "18" chromium ferrite type, the high-chromium ferrite type, or the dual-phase austenite/ferrite type in view of the heat transfer and corrosion resistance. On the inner surface of the circulating pipe 3 and the like which are made of the above-identified materials, said gold or gold-based alloy film is formed. These parts may also be coated with a polymer scale preventive agent which is conventionally known, or such an agent may be added to the reaction mixture.

As for the circulating pump 4, various kinds of pumps including, for example, a centrifugal vortex pump, a rotary pump, a screw pump and the like, can be used, and preferred is a pump having a structure with an impeller made up of a single helical blade attached to a conical hub. As an example of a pump having such a structure, the pump commercially available under the trade name of "Hidrostal Pump" (manufactured by Taiheiyo Kinzoku Co.) can be mentioned.

The strainer 5 is installed within the circulating pipe. Since the heat exchange tubes in the heat exchanger are liable to be clogged, preferably the strainer is installed between the bottom of the polymerization vessel and the inlet of the heat exchanger, and more preferably the strainer is installed between the bottom of the polymerization vessel and the inlet of the heat exchanger and is positioned as near as possible to the heat exchanger.

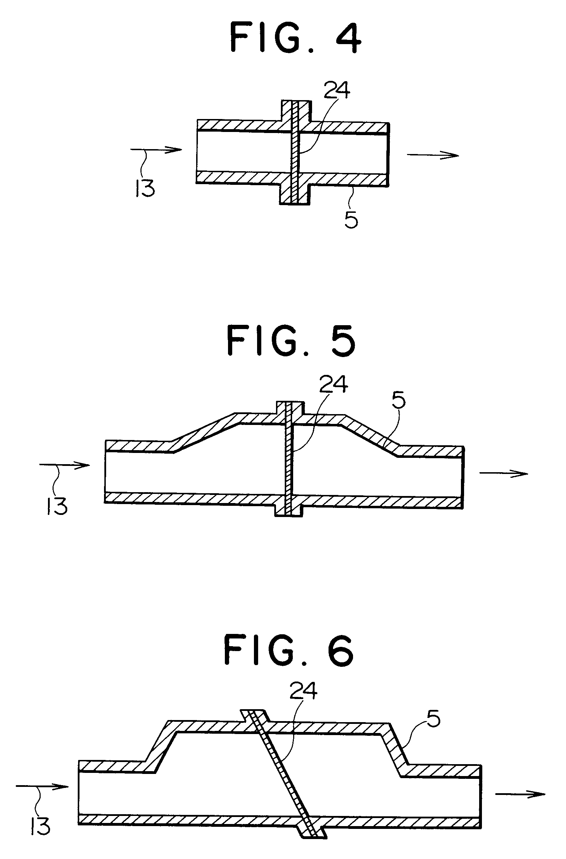

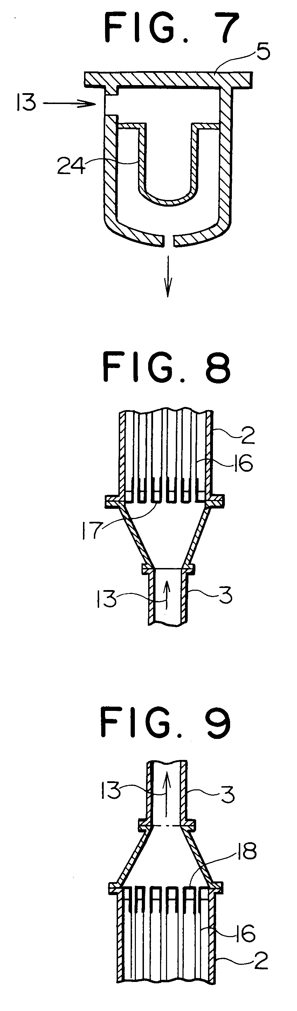

The inside of the strainer is provided with a filter having smooth surfaces in the form, for example, of a metal plate with openings formed by drilling or punched metal, by which polymer scale and polymer in the form of blocks are trapped. The size of the filter openings is preferably smaller than the inner diameter of the heat exchange tubes but large enough not to hinder the flow of reaction mixture, and is normally about 5 to about 30 mm in diameter. The shape of the strainer is preferably such that it does not allow the reaction mixture to become stagnant, and includes, for example, in-line type strainers, of which longitudinal cross sections are shown in Figs. 4 to 6, and a basket type strainer of which a cross section is shown in Fig. 7. Inside the strainer is installed a filter 24.

Next, Fig. 8 is an enlarged view taken in the vicinity of the inlet 10 to the heat exchanger 2. The reaction mixture, which has flowed from the pipe 3 into the heat exchanger 2 in the direction of the arrowhead 13, flows into the heat exchange tube 16 with a smaller diameter. In the vicinity of the inlet the gold or gold-based alloy film 17 is formed.

Further, Fig. 9 is an enlarged view taken in the vicinity of the outlet 11 of the heat exchange tube 16 in the heat exchanger 2. The reaction mixture flows out of the heat exchanger 2 to the pipe 3 in the direction of the arrowhead 13. In the vicinity of the outlet of the heat exchange tube 16, the gold or gold-based alloy film 18 is formed.

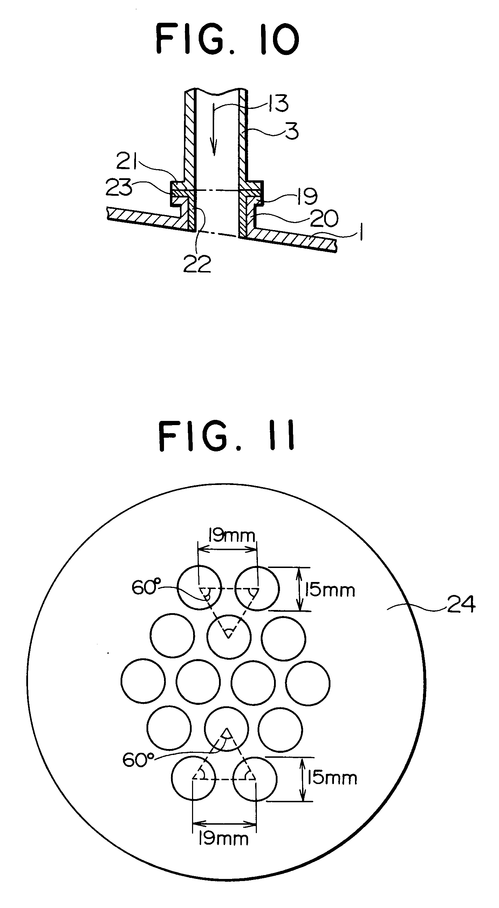

Fig. 10 is an enlarged view taken in the vicinity of a connection 12 where the circulating pipe 3 returns to the polymerization vessel 1. On the polymerization vessel 1 is mounted a pipe-shaped part 20 having a flange 19 at one end, which is connected to a flange 21 provided at the end of the pipe 3. In this example, an insert pipe 22 which has a flange 23 at one end and of which the outer diameter is almost the same as the inner diameter of the pipe-shaped part 20, and the flanges 19, 23 and 21 are fastened together with bolts (not shown in the drawing). The insert pipe 22 is easily removable and on its inner surface is formed the gold-based alloy or gold film.

Further, in order to reduce positions where the reaction mixture may stagnate, as much as possible, it is preferred to arrange the pieces of equipment, for example, so that the circulating pipe 3 is not branched or lengthened unnecessarily. Furthermore, the linear velocity of circulating the reaction mixture is preferably at least 0.7 m/sec, more preferably at least 1.0 m/sec, since it can reduce polymer scale deposition markedly.

The monomer having an ethylenic double bond which will be polymerized in the present polymerization apparatus may be, for example, a vinyl halide such as vinyl chloride; a vinyl ester such as vinyl acetate and vinyl propionate; acrylic acid and methacrylic acid and their esters or salts; maleic acid and fumaric acid and their esters or anhydrides; a diene monomer such as butadiene, chloroprene, and isoprene; and styrene; acrylonitrile; a vinylidene halide; a vinyl ether and the like. The present polymerization apparatus is suitable for the production particularly of a vinyl chloride polymer. The vinyl chloride polymer may be a vinyl chloride homopolymer, or a copolymer (normally containing not less than 50 % by weight of vinyl chloride) of a vinyl chloride with another vinyl monomer. The comonomer that can be copolymerized with the vinyl chloride may be, for example, an $\alpha$-olefin such as ethylene, propylene, 1-butene, 1-pentene, 1-hexene, 1-heptene, 1-octene, 1-nonene, 1-decene, 1-undecene, 1-dodecene, 1-tridecene, and 1-tetradecene; and acrylic acid or its esters such as acrylic acid, methyl acrylate, and ethyl acrylate; methacrylic acid or its ester such as methacrylic acid, methyl methacrylate, and ethyl methacrylate; maleic acid or its esters; a vinyl ester such as vinyl acetate and vinyl propionate; a vinyl ether such as vinyl lauryl ether and vinyl isobutyl ether; maleic anhydride; acrylonitrile; styrene; vinylidene chloride; and other monomers copolymerizable with vinyl chloride, which may be used singly or as a mixture of two or more.

The present polymerization apparatus is not limited as to the polymerization method to be used and is available for suspension polymerization, emulsion polymerization, bulk polymerization, solution polymerization and the like. It is particularly suitable for polymerization carried out in an aqueous medium such as suspension polymerization and emulsion polymerization.

A general polymerization method will specifically be described below by giving, as examples, suspension polymerization and emulsion polymerization.

First, water and a dispersant are charged into a polymerization vessel. After the inside of the polymerization vessel is evacuated so that the pressure may be reduced to 0.1 to 760 mmHg, a monomer is charged (at that time, normally the internal pressure of the polymerization vessel will become 0.5 to 30 kgf/cm$^2$·G). Further, after and/or before charging of the monomer, a polymerization initiator is charged. Then, the polymerization is carried out at a reaction temperature of 30 to 150°C. During the polymerization, if necessary, one or more of water, a dispersant, and a polymerization initiator are added. The reaction temperature of the polymerization may vary depending on the type of the monomer to be polymerized, and, for instance, in the case of polymerization of vinyl chloride, the polymerization is effected at 30 to 80°C, and in the case of polymerization of styrene, the polymerization is effected at 50 to 150°C. The polymerization can be judged to be completed when the internal pressure of the polymerization vessel drops to 0 to 7 kgf/cm$^2$·G, or when the difference between the inlet temperature and the outlet temperature of the cooling water flowing into and out from the jacket provided around the outer circumference of the polymerization vessel becomes almost zero (i.e. when heat is not generated by the polymerization reaction). Normally, the water, the dispersant, and the polymerization initiator that are charged when the polymerization is carried out are in amounts of 20 to 500 parts by weight, 0.01 to 30 parts by weight, and 0.01 to 5 parts by weight, respectively, per 100 parts by weight of the monomer.

Other conditions that are adopted in the polymerization, for example the method of charging the aqueous medium, monomer, polymerization initiator, dispersant or the like into the polymerization vessel and the charging ratio of them may be the same as those of the prior art. It is also optional to add to the polymerization system, if desired or necessary, a polymerization modifier, a chain transfer agent, a pH adjuster, a gelation improver, an antistatic agent, a crosslinking agent, a stabilizer, a filler, an antioxidant, a buffer, a scale preventive agent, and the like which are suitably used in the polymerization of a vinyl chloride.

EXAMPLES

An embodiment of the present invention will be described below based on the Example and the Comparative Example, but the present invention is not restricted to them.

Example 1

A polymerization apparatus having the structure shown in Fig. 1 was employed. The apparatus comprised a jacketed polymerization vessel 1 of a stainless steel having an internal volume of 2.1 m$^3$, a shell and tube multi-pipe type heat exchanger 2 having a heat transfer area of 5.0 m$^2$, a Hidrostal Pump 4 (24 m$^3$/hr x 7.5 m lift, having a flow rate variable apparatus using an invertor) as a circulating pump, and an in-line type strainer 5 (illustrated in Fig. 4) having a filter of a punched metal shape (thickness: 6 mm; diameter of openings: 15 mm; distance between the centers of the openings: 19 mm; and number of openings: 14) as shown in Fig. 11. Inner surfaces of the heat exchanger, the circulating pump, the strainer, pipes and valves were buffed before fabrication to the assembly of Fig. 1 so as to have a center-line mean roughness (Ra) of 0.06 $\mu$m and a maximum height (R max) of 0.5 $\mu$m. At the stage of connecting the heat exchanger, the circulating pump, the strainer, the pipes and the valves, the gold-based alloy film was formed on the inner surface of a dead space in the slurry recovery pipe 6 in the manner shown in Fig. 2 and on the inner surface of a dead space in the drain pipe 7 in the manner shown in Fig. 3. The gold-based alloy film was also formed in the vicinities of the inlet and the outlet of the heat exchange tubes 16 in the heat exchanger, as shown in Figs. 8 and 9, respectively. The gold-based alloy film was formed on the whole inner surface of the strainer as well. Furthermore, on the inner surface of the return inlet of the circulating pipe 3 to the polymerization vessel 1, the gold-based alloy film was formed in the manner shown in Fig. 10. All the above deposit film was formed by electroplating and was an Au-Co alloy film (film thickness: 2 μm; content of gold: 90 % by weight).

An aqueous solution made up of 840 kg of deionized water, 240 g of a partially saponified polyvinyl alcohol, and 160 g of a cellulose ether was placed in the polymerization vessel. Then, after the polymerization vessel was evacuated until the internal pressure reached 50 mmHg, 670 kg of vinyl chloride monomer was charged. While the reaction mixture was stirred, 2010 g of di-2-ethylhexyl peroxydicarbonate was pumped thereinto. Thereafter, while said reaction mixture in the polymerization vessel was circulated at a circulating flow rate of 390 l/min, hot water was passed into the jacket of the polymerization vessel and the heat exchanger to elevate the temperature. After the polymerization reaction started, cooling water was passed through the jacket, and cooling water having a temperature of 30°C was supplied to the heat exchanger at a rate of 10 m³/hr. The polymerization was continued with the internal temperature of the polymerization vessel kept at 55°C. When the internal pressure of the polymerization vessel dropped to 6.5 kgf/cm²·G, unreacted monomer was recovered, and the produced vinyl chloride polymer in the form of a slurry was taken out of the polymerization vessel and was dehydrated and dried.

With respect to the vinyl chloride polymer obtained, the bulk specific gravity, the particle size distribution, the plasticizer take-up, and the fish eyes in the case where the polymer was formed into a sheet were measured in accordance with the following methods. The results are given in Table 1.

(1) Bulk specific gravity: the measurement followed JIS K-6721.

(2) Particle size distribution: the polymer was sieved using #60, #80, #100, #150 and #200 sieves according to JIS Z-8801 and the undersize amounts (% by weight) were measured.

(3) Plasticizer take-up: Glass fiber was loaded into the bottom of an aluminum alloy container having an inner diameter of 25 mm and a depth of 85 mm and 10 g of the sampled vinyl chloride polymer was charged thereinto. 15 cc of dioctyl phthalate (hereinafter referred to as DOP) was added thereto, and they were allowed to stand for 30 min thereby permitting the DOP to be incorporated well in the polymer. Thereafter, excess DOP was centrifuged under an acceleration of 1500 G and the amount of the DOP absorbed into the 10 g polymer was measured and was expressed in terms of value per 100 g of the polymer.

(4) Fish eyes: 25 g of a mixture prepared by mixing 100 parts by weight of the vinyl chloride polymer, 50 parts by weight of DOP, 0.5 part by weight of tribasic lead sulfate, 1.5 parts by weight of lead stearate, 0.1 part by weight of titanium oxide, and 0.05 part by weight of carbon black was kneaded at 140°C for 5 min with a 6-inch kneading roll and was formed into a sheet having a width of 15 cm and a thickness of 0.2 mm. The number of transparent particles in the obtained sheet per 100 cm² was counted, and this was considered as the number of fish eyes.

Then, after the completion of three successive batches of the polymerization the state of polymer scale deposition in the circulating passage was investigated, and the results are given in Table 1.

Comparative Example 1

The polymerization of Example 1 was repeated, except that the alloy film was not formed.

With respect to the vinyl chloride polymer obtained, in the same way as in Example 1, the bulk specific gravity, the particle size distribution, the plasticizer take-up, and the number of fish eyes were measured. The results are given in Table 1.

After the completion of the polymerization the state of polymer scale deposition in the circulating passage was investigated, and the results are given in Table 1.

Table 1

| | | | Example 1 | Comparative Example 1 |
|---|---|---|---|---|
| Polymer-ization conditions | Time of starting circulation | | From the time of starting temperature elevation | From the time of starting temperature elevation |
| | Circulating flow rate (1/min) | | 390 | 390 |
| | Linear velocity in the heat exchanger (m/s) | | 1.2 | 1.2 |
| | Polymerization time(hr) | | 2.50 | 2.50 |
| | Min. temperature of cooling water (°C) | | 40 | 40 |
| Quality of polymer | Bulk specific gravity | | 0.525 | 0.524 |
| | Particle size distribution (passed amount, % by weight) | #60 | 100 | 100 |
| | | #80 | 66.1 | 60.8 |
| | | #100 | 31.7 | 39.6 |
| | | #150 | 5.4 | 8.4 |
| | | #200 | 0.4 | 0.3 |
| | Plasticizer take-up | | 22.4 | 22.5 |
| | Fish eyes | | 5 | 75 |
| State of polymer scale deposition in the circu-lating passage after completion of 3 batches | Strainer part 5 | | Polymer scale was not observed at all; Inner surface had a metallic luster. | Part of openings of the filter were nearly clogged. |
| | Inlet part 10 of heat exchange tube | | Polymer scale was not observed at all; Inner surface had a metallic luster. | Part of heat exchange tubes were nearly clogged. |
| | Outlet part 11 of heat exchange tube | | Polymer scale was not observed at all; Inner surface had a metallic luster. | Polymer scale was deposited in the form of film on the whole surface. |
| | Return inlet part 12 of circulating pipe to polymer vessel | | Polymer scale was not observed at all; Inner surface had a metallic luster. | Polymer scale was deposited in the form of film on the whole inner surface of pipe. |
| | Dead space parts of slurry pipe and drain pipe | | Polymer scale was not observed at all; Inner surface had a metallic luster. | Polymer scale was partly deposited. |

**Claims**

1. A polymerization apparatus which comprises a polymerization vessel (1) and a circulating passage for circulation of a reaction mixture comprising a heat exchanger (2) installed outside said polymerization vessel and a circulating pipe (3) extending from said polymerization vessel and returning to said polymerization vessel through said heat exchanger, wherein at least a part of the inner surfaces of said circulating passage with which the reaction mixture comes into contact is coated with a film of gold or a gold-based alloy.

2. A polymerization apparatus as claimed in claim 1, wherein an inlet part (10) of a heat exchange tube in said heat exchanger (2) is coated with a film of gold or said alloy.

3. A polymerization apparatus as claimed in claim 1 or 2, wherein an outlet part (11) of a heat exchange tube in said heat exchanger (2) is coated with a film of gold or said alloy.

4. A polymerization apparatus as claimed in any of claims 1 to 3, wherein a return inlet of said circulating pipe to said polymerization vessel is coated with a film of gold or said alloy.

5. A polymerization apparatus as claimed in any of claims 1 to 4, which further comprises a strainer (5) and an inlet part of the strainer is coated with a film of gold or said alloy.

6. A polymerization apparatus as claimed in any of claims 1 to 5, wherein a part where said circulating pipe in the circulating passage is connected to a branch pipe branching from said circulating pipe is coated with a film of gold or said alloy.

7. A polymerization apparatus as claimed in claim 6, wherein said branch pipe is a slurry recovery pipe, a drain pipe or a bypass pipe.

8. A polymerization apparatus as claimed in any of claims 1 to 7, wherein the gold-based alloy is an Au-Co alloy, an Au-Ni alloy or an Au-Co-Ni alloy containing 50 % by weight or more of gold.

9. A polymerization apparatus as claimed in any of claims 1 to 8, wherein the gold-based alloy contains from 70 % by weight or more of gold.

10. A polymerization apparatus as claimed in any of claims 1 to 9, wherein the film of gold or said alloy is 0.01 to 3 $\mu$m in thickness.

11. A process for polymerizing a monomer having an ethylenic double bond, which comprises conducing the polymerization in a polymerization apparatus as claimed in any of Claims 1 to 10.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

**European Patent Office**

# EUROPEAN SEARCH REPORT

Application Number

EP 93 31 0607

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | GB-A-1 190 587 (NORSK HYDRO-ELEKTRISK) <br> * page 2, line 3; claims 1-7; examples 1-3 * <br> --- | 1-11 | C08F2/00 <br> C08F14/06 <br> F28F19/00 |
| A | DATABASE WPI / DERWENT, access number 72-06546t <br> (04); & JP-B-47 00 26 01 (NPPON OIL CO., LTD) <br> *Abstract* <br> ----- | 1 | |
| | | | TECHNICAL FIELDS SEARCHED (Int.Cl.5) <br><br> C08F |

The present search report has been drawn up for all claims

| Place of search | Date of completion of the search | Examiner |
|---|---|---|
| THE HAGUE | 26 April 1994 | Glikman, J-F |